# EUROPEAN PATENT APPLICATION

(11) **EP 4 161 170 A1**
(43) Date of publication of application: **05.04.2023**
(21) Application number: 21200589.6
(22) Date of filing: 01.10.2021
(51) Int. Cl.: H04W 56/00, H04W 74/00, H04W 74/08

(54) **REDUCING CONTENTION BY IMPROVING THE IDENTIFICATION OF THE TARGET OF A RESPONSE SIGNAL**

(71) Applicant: Nokia Technologies Oy, 02610 Espoo (FI)
(72) Inventor: Medeiros de Amorim, Rafhael, 9000 Aalborg (DK); WIGARD, Jeroen, 9270 Klarup (DK)
(74) Representative: Script IP Limited

(57) **Abstract**

An apparatus, method and computer program for aiding identification of a target of a response to a request. The apparatus comprises means for generating the request. Means for determining a timing advance to be applied to a predetermined time of transmission of the request in order for the request to reach a destination at the predetermined time. Means for transmitting the request signal towards the destination. Means for receiving a response, the response comprising a timing advance indication, the timing advance indication indicating a difference in time between receipt of the request signal and the predetermined time. Means for determining from the timing advance indication and the determined timing advance whether the received response is a response to the request.

## Description

### TECHNOLOGICAL FIELD

Various example embodiments relate to reducing contention by enabling a device such as a user equipment to better determine whether a response signal is directed to that device or to another device.

### BACKGROUND

In wireless communications many request signals, such as connection requests trigger a response, which in turn may trigger a further message. Where there are several devices transmitting requests at a similar time and at a similar location then a response directed to one may be received by several and where it is not clear to the devices whether the response is directed to them or not, several may reply and this can lead to contention.

It would be desirable to be able to reduce such contention by providing the devices with additional means of identifying the intended target of the response signal.

### BRIEF SUMMARY

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to various, but not necessarily all, embodiments of the invention there is provided an apparatus comprising: means for generating a request; means for determining a timing advance to be applied to a predetermined time of transmission of said request in order for said request to reach a destination at said predetermined time; means for transmitting said request signal towards said destination; means for receiving a response, said response comprising a timing advance indication, said timing advance indication indicating a difference in time between receipt of said request signal and said predetermined time; means for determining from said timing advance indication and said determined timing advance whether said received response is a response to said request.

It was recognised that for some signals that are transmitted from an apparatus such as a user equipment towards a network node a timing advance may be applied so that the signal arrives at a predetermined time, the predetermined time being a time that allows synchronisation between uplink and downlink frames at the destination node and in effect compensates for delays due to the transmission. In effect the timing advance is a negative offset that if applied at the apparatus allows the downlink and uplink frames to by synchronised at the receiving node. In this regard synchronised means that the uplink and downlink frames are time aligned or that there is a deterministic offset between them. The timing advance compensates for delays during transmission enabling uplink signals from different devices to be received at similar instants substantially independent of the propagation delays. In Non-Terrestrial Networks (NTN) for example, where satellite links are used to provide cellular communication there may be significant delays to a signal that is transmitted from a UE via the satellite link to the destination node and thus, timing advances may in these situations be particularly useful.

The apparatus may be configured with means that allow it to determine how long such a timing advance should be. Network nodes may also be configured to determine the required timing advance from the time that a signal is received and may transmit an indication of this timing advance in a response to the request. In effect the timing advance may be determined at both the apparatus and the network node.

It was recognised that where an apparatus has the means for determining a required timing advance for a signal, perhaps by determining the expected delay for transmission of that signal, then a comparison of this determined timing advance with the timing advance indicated by the network node in the response could be used as an indication as to whether the response was for that particular apparatus or not. In this way an additional way of determining whether a response is directed to a particular apparatus is provided and contention can be reduced.

In some embodiments, the apparatus further comprises means for providing a timing offset; said means for transmitting said request signal towards said destination being configured to transmit said request signal with said selected timing offset; wherein said means for determining whether said received response is a response to said request is configured to determine this from said timing advance indication, said timing offset and said determined timing advance.

In some embodiments, said means for providing an offset comprises a means for selecting one of a plurality of predetermined timing offsets.

In some embodiments, the means for providing comprises a means for selecting an offset from a plurality of predetermined offsets. In other embodiments, the timing offset may be provided in another way, such as by a random number generator configured to generate values for the timing offest within a predefined range.

Where the means for providing is a means for selecting, then the means for selecting may randomly select the one of the plurality of predetermined timing offsets, in other embodiments it may select the timing offset based on a particular scheme such as an algorithm which may be based on detection of the density of other user equipment in the area.

In some embodiments, the apparatus further comprises means for adding said selected timing offset to said timing advance to generate an updated timing advance; said means for transmitting said request being configured to transmit said request with said updated timing advance to said destination; means for determining whether said received response is said response to said request by determining whether said selected timing offset and said indication of said timing advance differ by less than a predetermined amount.

In some embodiments, said predetermined amount is an acceptable error in determining said expected time delay.

In some embodiments, each of said plurality of predetermined timing offsets are less than a time period during which said request can be safely received at said destination.

In some embodiments, the predefined range that the random number generator generates values for the timing offset within is a range where the values are less than a time period during which said request can be safely received at said destination.

In some embodiments, said plurality of timing offsets includes no offset, that is a timing offset of o seconds.

In some embodiments, the apparatus comprises a data store for storing said plurality of predetermined timing offsets.

In some embodiments, the apparatus comprises a means for receiving said plurality of timing offsets.

In some embodiments, the timing offset values may be received from the network, perhaps from a base station.

In some embodiments, said means for providing is configured to determine where a collision is unlikely and to select to apply no timing offset to said timing advance.

In some embodiments, the apparatus may be able to determine where a collision is unlikely and in such a case may select not to apply a timing offset and not to determine from the timing advance indication and determined timing advance whether the received response is a response to the request as it may assume that it will be as a collision is unlikely and the additional overhead of performing these comparisons is not required.

In some embodiments, the apparatus further comprises means for determining an expected time delay for transmission of said request signal to said destination, said timing advance being determined in dependence upon said expected time delay.

In some embodiments, said means for determining is configured to determine said expected time delay in dependence upon at least one of a velocity of said apparatus, a velocity of a satellite configured to relay said connection request to said destination and a position of said apparatus.

Although, the request may be a request for a number of things, in some embodiments, said request comprises a connection request and said response comprises a connection response.

Although this technique can be applied to any request where the destination sends a timing advance indication, it is particularly applicable to a connection request which request triggers several subsequent messages as in this case a significant delay occurs if there is contention and the messages are not successfully transmitted.

In some embodiments, said connection request comprises a random access preamble and said connection response comprise a random access response.

In some embodiments, the means comprise: at least one processor; and at least one memory including computer program code, the at least one memory and computer program code being configured to, with the at least one processor, cause the performance of the apparatus.

According to various, but not necessarily all, embodiments of the invention there is provided according to a further aspect a method comprising: generating a request; determining a timing advance required for said request to reach a destination at a predetermined time; outputting said request for transmission towards said destination; receiving a response, said response comprising a timing advance indicator, said timing advance indicator indicating a difference in time between receipt of said request at said destination and said predetermined time; determining whether said received response is a response to said request in dependence upon said timing advance indicator and said determined timing advance.

In some embodiments, the method further comprises providing a timing offset; transmitting said request signal towards said destination with said selected timing offset; and determining whether said received response is a response to a said request from said timing advance indication, said timing offset and said determine timing advance.

In some embodiments, said step of providing an offset comprises selecting one of a plurality of predetermined timing offsets.

In some embodiments, the method further comprises adding said selected timing offset to said timing advance to generate an updated timing advance; said step of transmitting said request comprises transmitting said request with said updated timing advance to said destination; and said step of determining whether said received response is said response to said request comprises determining whether said selected timing offset and said indication of said timing advance differ by less than a predetermined amount.

In some embodiments, the method comprises an initial step of determining whether a collision is unlikely and said selecting step comprises selecting to apply no timing offset to said timing advance where it is determined that a collision is unlikely.

In some embodiments, the step of determining said timing advance comprises: determining an expected time delay for transmission of said request signal to the destination.

According to various, but not necessarily all, embodiments of the invention there is provided a computer program comprising computer readable instructions which when executed by a processor are operable to control said processor to perform a method according to the further aspect.

According to various, but not necessarily all, embodiments of the invention there is provided an apparatus comprising: circuitry configured to generate a request; circuitry configured to determine a timing advance to be applied to a predetermined time of transmission of said request in order for said request to reach a destination at said predetermined time; circuitry configured to transmit a request signal towards said destination; circuitry configured to receive a response, said response comprising a timing advance indication, said timing advance indication indicating a difference in time between receipt of said request signal and said predetermined time; circuitry configured to determine from said timing advance indication and said determined timing advance whether said received response is a response to said request.

In some example embodiments, said apparatus further comprises: circuitry configured to select one of a plurality of predetermined timing offsets; circuitry configured to transmit said request signal towards said destination with said selected timing offset; wherein said circuitry configured to determine whether said received response is a response to said request is configured to determine this from said timing advance indication, said timing offset and said determined timing advance.

In some example embodiments, said apparatus further comprises circuitry configured to add said selected timing offset to said timing advance to generate an updated timing advance; said circuitry configured to transmit said request being configured to transmit said request with said updated timing advance to said destination; said circuitry configured to determine whether said received response is said response to said request is configured to determine whether said selected timing offset and said indication of said timing advance differ by less than a predetermined amount.

In some example embodiments, said apparatus further comprises circuitry configured to store said at least one predetermined timing offset.

In some example embodiments, said apparatus further comprises circuitry configured to receive said timing offset values.

In some example embodiments, said apparatus further comprises circuitry to select is configured to determine where a collision is unlikely and to select to apply no timing offset to said timing advance.

In some example embodiments, said apparatus further comprises circuitry configured to determine an expected time delay for transmission of said request signal to said destination, said timing advance being determined in dependence upon said expected time delay.

Further particular and preferred aspects are set out in the accompanying independent and dependent claims. Features of the dependent claims maybe combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates the Random Access Procedure for a UE connecting to the network in LTE/5G NR;
Fig. 2 illustrates the contents of a RAR random access response;
Fig.3 is a flowchart illustrating steps in a method according to an embodiment;
Fig. 4 schematically illustrates a user equipment according to an embodiment; and
Fig. 5 schematically shows a flow chart illustrating steps in a method according to an embodiment.

### DETAILED DESCRIPTION

Before discussing the example embodiments in any more detail, first an overview will be provided.

Example embodiments maybe used in cases where UEs are capable of estimating with high precision the delay of their signals to a network node. Examples include industrial settings where the network node is an access point or in the field of Non-Terrestrial Networks (NTN), more specifically, the field of using satellite links to provide cellular communication to UEs in remote areas, in disaster zones or over the sea.

Looking at the NTN example, there are several types of satellite deployments that can be considered. For the scope of this application the most important definitions are:
- Satellite Altitude:
   o GEO (Geostationary Earth Orbits): Located at approximately 36000 km from Earth, above the equator, the orbit period of this satellite is equivalent to one astronomical day. Therefore, the satellite is static from the point of view of one user on Earth.
   ∘ LEO (Low Earth Orbits): Located at heights between 300 and 1500 km above Earth. They may be deployed in different orbit inclinations and orientations around Earth, and travel and significant speeds (approximately 7500 m/s at 600 Kms) and have a very high relative speed from an observer on Earth.
- Architecture:
   ∘ Regenerative: In this architecture, at least the lower layers are implemented at the hardware located in the satellite, meaning that some central functions deployed by the gNb are deployed at the satellite (scheduling, retransmissions, random access response).
   ∘ Transparent: In the transparent architecture, the satellite hardware acts simply as a repeater (or frequency converter) for the gNb located on the ground. In this case the latency of the scheduling algorithms are approximately twice as high as in the case before.

The GEO satellites have been around for decades are mostly used for low throughput applications. Recent technical developments have made the LEO deployments significantly more attractive for new medium and high throughput applications using satellites. Several private companies are endeavouring to provide communication solutions using LEO systems.

Compared to legacy 3GPP systems, there are challenges to be addressed in order to provide NTN coverage in a system natively designed to provide terrestrial coverage. Namely:
- Ultra high speeds: The relative speed between a LEO satellite and a UE on the ground is on the range of 7 km/s, which is much higher than anything previously studied for 3GPP deployments. It affects the frequency synchronization, channel model, handover rate, etc.
- Very high latency: the propagation delay of the signal in the case of transparent scenario can be as high 500 ms in case of a GEO satellite (and about 40 ms in case of LEO).

In current 3GPP release 17 work item on Non Terrestrial Networks (NTN), several agreements were made respective to the long delays experienced by the UE due to the large distances to the satellite (above the limits that can be simply corrected via 5G NR common signalling due to UE-satellite distances being at least 600 km). Other agreements also were made in support of corrective frequency doppler measures, introduced due to high satellite speeds.

Among such agreements:
Agreement: (RAN1#102e)
- In Rel-17 NR NTN, at least support UE which can derive based on its GNSS implementation one or more of:
   ∘ its position
   ∘ a reference time and frequency
- And, based on one or more of these elements together with additional information (e.g., serving satellite ephemeris or timestamp) signalled by the network, can compute timing and frequency, and apply timing advance and frequency adjustment at least for UE in RRC idle/inactive mode.

There is growing interest in 3GPP to introduce solutions for reducing latency in NTN communications. The reasons are twofold. First, the RTT delays in NTN are already very large (from dozens of ms in LEO deployments to up to 500 ms in GEO), and each extra step in signalling or radio control exchange represents significant additional latency for the payload transmission. Secondly, NTNs are expected to provide coverage in under-served and/or remote areas, and if UEs require a larger time to execute simple procedures, they will spend extra energy that may be a scarce resource.

Example embodiments make use of the idea that both a UE and network node may independently determine a timing advance required to compensate for the round trip time delay in transmitting the signals and that this independent determination can be used to help identify whether a response is the expected response to a transmitted request or is a response to a request from another device. In this regard the inventors recognised that where a user equipment has means to accurately determine the expected round trip time delay of signals between it and a network node and the network node provides an indication of the timing advance required for a received signal in its response then a comparison of the two may indicate if the response is directed at that user equipment or at another device. Thus, embodiments compare the UE determined timing advance with the network node indicated timing advance to determine whether the response is a response to the request sent by the user equipment, or whether the timing advance indicated does not correlate with the estimated timing advance and thus, it is likely not to be the expected response and should be disregarded.

In example embodiments, the UE determines the expected time delay and performs time pre-compensation using the information available (satellite ephemeris, cell broadcast, GNSS, etc). The UE, as agreed in 3GPP, calculates the timing advance to compensate the RTT (round trip time). Ideally this will lead to perfect pre-compensation, meaning that the timing advance command (TAC) in msg 2 - the response is zero or at least very close to zero.

In some cases the user equipment may apply a particular offset in some cases in addition to its determined timing advance to the request signal and then compare the indicated timing advance in a received response with the particular offset applied and the determined timing advance to determine whether the response is a response to its request or not. In some embodiments, the offset that is applied may be selected from a plurality of predetermined offsets perhaps stored on the UE, while in others it may be a value generated by a random number generator that is configured to generate values within a predefined range. Where a set of UEs each select a different particular offset perhaps from a set of offset values, then this may allow an individual UE to more accurately differentiate between the responses using the indicated timing advances.

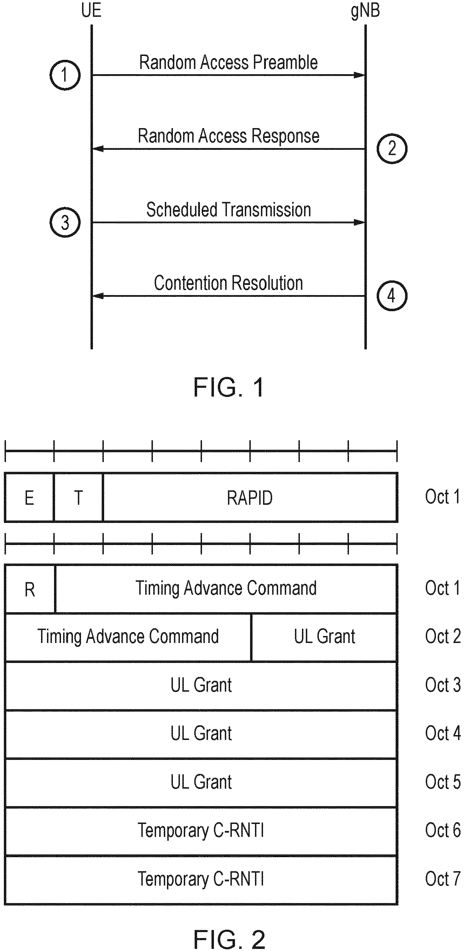

Embodiments seek to address the problem of contention resolution, particularly in the initial access (from idle to connected mode). When the UE, initially in idle mode, has detected incoming data on the buffer to be transmitted on UL, or when the UE receives a paging from the eNb, the UE must initiate the connected mode. For that, the UE sends a Random Access Preamble towards the eNb, as depicted in Fig. 1.

After the UE sends the message 1, it will wait for the message 2 (Random Access Response). The RAR contains the synchronization and identity information of the UE to be used towards the eNb, It also contains the scheduling information for the subsequent transmission of message 3, as depicted in Fig. 2. The RAPID (RA preamble ID) in the header indicates this response is addressed to the UE that used the same RAPID in Msg 1. In case two or more UEs utilize the same RAPID during the same RA (random access) occasion, all these users will read this message and follow up with the transmission of Msg 3.

In this case these UEs may act as destructive interference, causing none of them to succeed in sending Msg 3. Or just one UE will be able to get Msg 3 through, but this will be only clear after the reception of Msg 4. The "failing" UEs will only discover the RACH attempt failed after 4 messages, before a new attempt is made. In the case of a GEO scenario, this may add up to more than 2 seconds.

In example embodiments, the UE chooses a random value for an offset delay to be added on top of the timing pre-compensation before sending MSG1 (the request). This may be the expected timing advance "mismatch" between UE and gNB, which will be detected by the gNB and informed back to UE via RAR (random access response). Upon receiving the random access response, with a valid RAPID (random access preamble identifier), the UE reads the TA (timing advance) field (see Fig. 2). If the TA info provided by the gNb is not within the range estimated by the UE for the "mismatch", the UE assumes the RAR is not addressed to itself, and goes on to a new RA attempt after the backoff timing.

In example embodiments UEs capable of performing very refined TA pre-compensation, will add a "manageable and known" offset to this compensation, in order to check the validity of the gNB TA response. The goal is comparing the TA command provided by the gNB in the RAR with the RAPID associated to the UE with the expected value of timing advance determined by that UE.

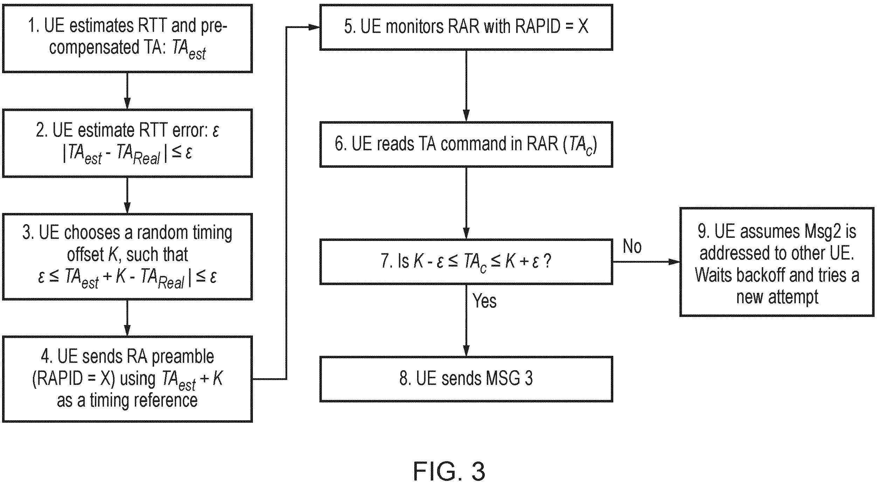

The principle of an example embodiment is presented in the flowchart in Fig. 3 and described below.

At step 1 the UE calculates the time advance pre compensation (TAest ) at a refined level by estimating the RTT (using ephemeris, broadcast, GNSS, etc).

At step 2 the UE estimates the potential error ε in the timing advance estimation from a difference between TAest and the real timing advance (TAreal). This difference may come from different sources, i.e. from potential inaccuracies and movements between the elapsed time for the exchange of messages in initial access. The difference depends on certain parameters such as how often information like the satellite ephemeris, and GNSS is checked, other error sources and the steps size of the TA may also be factors. In some embodiments the UE may obtain a value for ε from a lookup table where a value is retrieved based on the current value of the parameters that affect the value of minimum value of ε.

In some embodiments the network (RAN) may specify a minimum value for this difference ε.

At step 3 the UE chooses an offset delay, κ, to be added to the timing advance information. This offset is better chosen if it falls in a range where the later residual TA provided in the TA command cannot be entirely attributed to the inaccuracy of the initial estimation, therefore the suggested (optional) rule: κ-∈ ≤TAest+κ-TAreal ≤: κ+∈. The offset delay may be a random value or it may be selected from a set of values that are supplied to the UE by the network.

Note: The value of κ may be negative and the principle of the idea is still maintained Note: The value of κ is better chosen to ensure the delay does not exceed the cyclic prefix in the gNB, that is the time delay is within a time period during which the request can be correctly received at said destination. In some embodiments, the network, in some cases the RAN, may specify a range of values or a set of predefined values for k that the UE can choose from.

At step 4 the UE sends a preamble, associated with a RAPID (random access preamble ID), but instead of using the full compensated TAest, the UE uses the offset value TAest+κ as the timing advance.

At step 5, The UE scans for RAR with the same RAPID.

At step 6 the UE reads the TA command (TAc) in the RAR associated with the same RAPID. That is the timing advance indicated by the network node.

At step 7 it is determined if the TAc in the RAR is reasonable as a response for its initial transmission. In the example, if the TA command magnitude satisfies: κ-∈≤TAc≤ κ+∈.

If the condition is satisfied then the method proceeds to step 8 and the UE completes the RA procedure and sends Message 3. Potential contention is further resolved in Message 4, as per legacy procedure.

If the UE detects this message is not within the expected timing range, the UE proceeds to step 9 and stops the procedure and goes directly for a new RA attempts (2 message exchanges are saved on top of further interference caused in Message 3 transmission)

Note: The differential TA associated to the movement of the satellite and the UE in the elapsed time between Msg1 (RA preamble) and Msg 2 (RAR) may be used by the UE algorithm to be discounted from TAc in the formula above

As the precision of the algorithm is expected to be high, the offset value, κ, may be of the order of microseconds. Even for very strict preamble formats, with very short cyclic prefixes, there may still have the opportunity to add this offset delay to the preamble transmission.
- The larger the preamble's cyclic prefix, the more values of κ can be chosen, increasing even more the collision avoidance.
- Even in strict scenarios, where only one value of κ (that is not zero) is feasible, the UE will have two choices, "applying or not the delay offset". And this will increase the collision avoidance significantly.

For example, in a scenario with 1% probability of collision in RA from different UEs, with 32 preambles, by artificially creating two more options of transmission (with and without delay offset), the collision probability is almost halved, with the additional advantage that most collisions will be more quickly detected by UEs that have the capabilities to use this feature, saving time and energy.

Although the above example was with respect to NTN example embodiments are not restricted to NTN. In industrial settings (Industry 4.0), there are many scenarios where the UEs are capable of estimating with high precision their delay to the access point, either because of high synchronization of devices, using the access point as a master clock or because the static nature of some industrial settings over time. In this cases, in a context of several RA attempts per second such as an industrial settings, this solution provides one more possibility to reduce contention in the random access.

Embodiments provide a gain when multiple UEs access the system at the same time with the same preamble the gain depends on the load (number of random access attempts in a cell), the invention can be configured to only be used when the load is high by RAN. In this regard there may be an initial step in the method of Fig. 3 wherein the network transmits a signal indicating load is high and the contention reduction method should be applied, or that load is low and steps 2 to 7 do not need to be applied, the method going from step 1 to step 8.

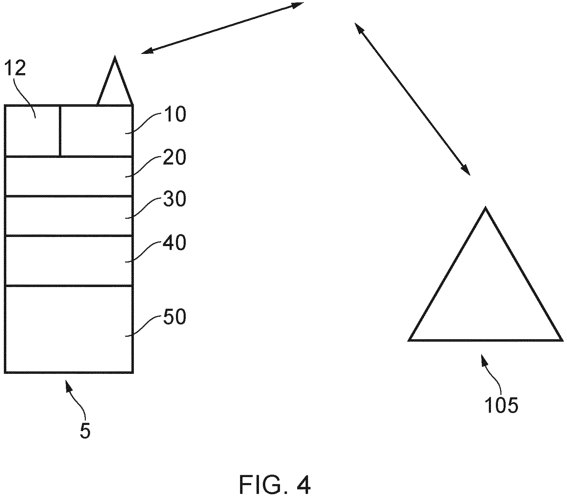

Fig.4 shows an example embodiment of a user equipment 5 communicating via a satellite link with network node 105. User equipment 5 comprises transmitting circuitry 10 for transmitting signals towards a network node and receiving circuitry 12 for receiving signals from the network node. In this example the signals go via a satellite link and there is thus, some delay in the transmission of the signals. User equipment 5 has circuitry 50 for estimating an expected time delay for a signal transmitted to the network node via the satellite and for determining based on this a timing advance that should be applied to a signal to compensate for this delay.

There is also selecting circuitry 20 for selecting one of a plurality of timing offsets that are stored in data store 30. These timing offsets may have been received from the network.

Where the UE 5 is to transmit a request such as a connection request to the network node 105 and it is determined by the network that the load is high and that contention may arise, the UE 5 may be configured to apply the contention reduction technique of embodiments. In this case UE 5 will estimate a timing advance using circuitry 50 and select a timing offset using selecting circuitry 20 and apply a timing advance based on the estimated timing advance plus the selected offset to the request at the transmitting circuitry 10 when transmitting the request towards the network node 105.

A response is received at receiving circuitry 12 and if it has an ID corresponding to the UE, determining circuitry 40 that may be in the form of a comparator will compare the timing advance supplied by the network node and indicated in the received response with the timing advance that was applied to the request prior to transmission. If the timing advance indicated is the same or similar to the timing advance applied by the transmitting circuitry 10, then circuitry 40 determines that the response is directed to UE 5 and the UE proceeds to respond to the response. If the timing advance indicated is different to the timing advance that was applied by more than a predetermined amount, then UE 5 determines that the received signal was not a response to its request and discards the signal.

It should be noted that the circuitry for estimating a timing advance 50, the circuitry for selecting a timing offset 20 and the circuitry for comparing the timing advances 40 may be processing circuitry configured either by hardware or software to perform these functions.

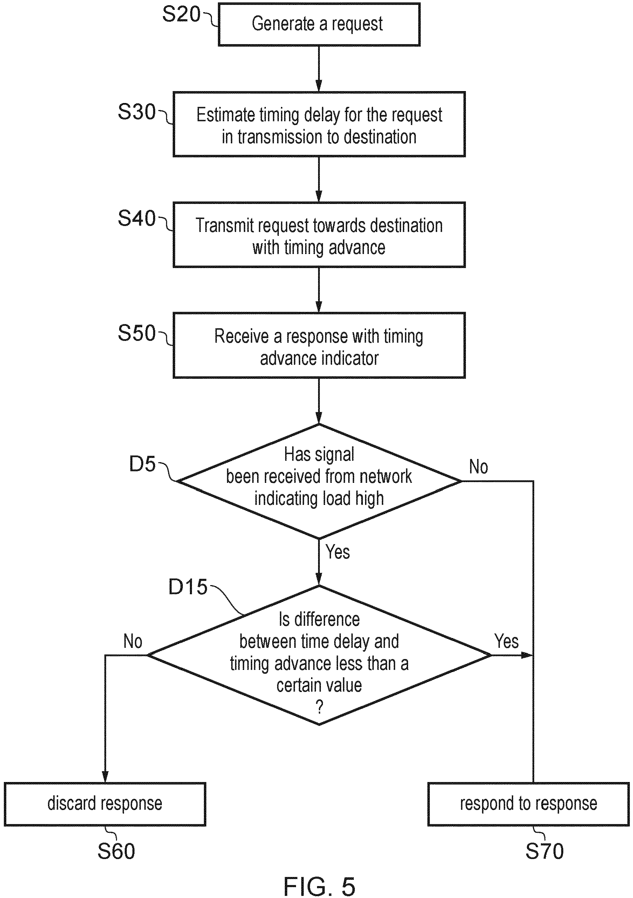

Fig. 5 illustrates schematically the steps in a method according to a simplified embodiment, where no timing offset is selected or applied.

In this embodiment at step S20, the UE generates a request and at step S30 it estimates a timing delay for transmission of the request to the destination node. At step S40 the UE transmits the request with a timing advance based on the calculated timing delay towards the destination. At step S50 a response is received and this response has a timing advance indicator associated with it. If at D5 it is determined that the current network load is high and the contention reduction technique should be employed, then the UE determines at step D15 the difference between the applied timing advance and the indicated timing advance and if it is less than a certain value it determines that the response is directed to this UE and responds at step S70. If it is not less than this value then the UE discards the response at step S60. Where the network has not indicated a high loading then the UE simply proceeds to step S70 and responds to the response.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
means for generating a request;
means for determining a timing advance to be applied to a predetermined time of transmission of said request in order for said request to reach a destination at said predetermined time;
means for transmitting said request signal towards said destination;
means for receiving a response, said response comprising a timing advance indication, said timing advance indication indicating a difference in time between receipt of said request signal and said predetermined time;
means for determining from said timing advance indication and said determined timing advance whether said received response is a response to said request.

2. An apparatus according to claim 1, further comprising:
means for providing a timing offset;
said means for transmitting said request signal towards said destination being configured to transmit said request signal with said selected timing offset; wherein
said means for determining whether said received response is a response to said request is configured to determine this from said timing advance indication, said timing offset and said determined timing advance.

3. An apparatus according to claim 2, wherein an offset comprises a means for selecting one of a plurality of predetermined timing offsets.

4. An apparatus according to claim 2 or 3, further comprising
means for adding said timing offset to said timing advance to generate an updated timing advance;
said means for transmitting said request being configured to transmit said request with said updated timing advance;
said means for determining whether said received response is said response to said request is configured to determine whether said selected timing offset and said indication of said timing advance differ by less than a predetermined amount.

5. An apparatus according to claim 4, wherein said predetermined amount is an acceptable error in determining said expected time delay.

6. An apparatus according to any one of claims 3, or 4 or 5 when dependent upon claim 3, wherein each of said plurality of predetermined timing offsets are less than a time period during which said request can be safely received at said destination.

7. An apparatus according to any one of claims 3, or 4 to 6 when dependent upon claim 3, wherein said plurality of timing offsets includes no offset, that is a timing offset of 0 seconds.

8. An apparatus according to any one of claims 3, or 4 to 7 when dependent upon claim 3, comprising means for storing said plurality of predetermined timing offsets.

9. An apparatus according to any one of claims 2 to 7, comprising a means for receiving said plurality of predetermined timing offsets.

10. An apparatus according to any one of claims 2 to 9 wherein said means for providing is configured to determine where a collision is unlikely and to select to apply no timing offset to said timing advance.

11. An apparatus according to any preceding claim, comprising means for determining an expected time delay for transmission of said request signal to said destination, said timing advance being determined in dependence upon said expected time delay.

12. An apparatus according to any preceding claim, wherein said request comprises a connection request and said response comprises a connection response.

13. An apparatus according to any preceding claim, wherein the means comprise: at least one processor; and at least one memory including computer program code, the at least one memory and computer program code being configured to, with the at least one processor, cause the performance of the apparatus.

14. A method comprising:
generating a request;
determining a timing advance required for said request to reach a destination at a predetermined time;
outputting said request for transmission towards said destination;
in response to receiving a response, said response comprising a timing advance indicator, said timing advance indicator indicating a difference in time between receipt of said request at said destination and said predetermined time, determining whether said received response is a response to said request in dependence upon said timing advance indicator and said determined timing advance.

15. A computer program comprising computer readable instructions which when executed by a processor are operable to control said processor to perform a method according to claim 14.

## Amended claims

### Amended claims in accordance with Rule 137(2) EPC.

1. A user equipment comprising:
means for generating a request;
means for determining a timing advance to be applied to a predetermined time of transmission of said request in order for said request to reach a network node at said predetermined time;
means for transmitting said request signal towards said network node;
means for receiving a response from said network node, said response comprising a timing advance indication, said timing advance indication indicating a difference in time between receipt of said request signal and said predetermined time;
means for determining from said timing advance indication and said determined timing advance whether said received response is a response to said request;
means for determining an expected time delay for transmission of said request signal to said network node, said timing advance being determined in dependence upon said expected time delay; **characterised by**
the user equipment further comprising:
means for providing a timing offset;
said means for transmitting said request signal towards said network node being configured to transmit said request signal with said selected timing offset; wherein
said means for determining whether said received response is a response to said request is configured to determine this from said timing advance indication, said timing offset and said determined timing advance.

2. A user equipment according to claim 1, wherein said means for providing a timing offset comprises a means for selecting one of a plurality of predetermined timing offsets.

3. A user equipment according to claim 1 or 2, further comprising
means for adding said timing offset to said timing advance to generate an updated timing advance;
said means for transmitting said request being configured to transmit said request with said updated timing advance;
said means for determining whether said received response is said response to said request is configured to determine whether said selected timing offset and said indication of said timing advance differ by less than a predetermined amount.

4. A user equipment according to claim 3, wherein said predetermined amount is an acceptable error in determining said expected time delay.

5. A user equipment according to any one of claims 2, or 3 or 4 when dependent upon claim 2, wherein each of said plurality of predetermined timing offsets are less than a time period during which said request can be correctly received at said network node.

6. A user equipment according to any one of claims 2, or 3 to 5 when dependent upon claim 2, wherein said plurality of timing offsets includes no offset, that is a timing offset of 0 seconds.

7. A user equipment according to any one of claims 2, or 3 to 6 when dependent upon claim 2, comprising means for storing said plurality of predetermined timing offsets.

8. A user equipment according to any one of claims 1 to 6, comprising a means for receiving said plurality of predetermined timing offsets.

9. A user equipment according to any one of claims 1 to 8 wherein said means for providing is configured to determine where a collision is unlikely and to select to apply no timing offset to said timing advance.

10. An apparatus according to any preceding claim, wherein said request comprises a connection request and said response comprises a connection response.

11. A user equipment according to any preceding claim, wherein the means comprise: at least one processor; and at least one memory including computer program code, the at least one memory and computer program code being configured to, with the at least one processor, cause the performance of the user equipment.

12. A method performed at a user equipment comprising:
generating a request;
determining an expected time delay for transmission of said request to said network node;
determining a timing advance required for said request to reach a network node at a predetermined time, said timing advance being determined in dependence upon said expected time delay;
outputting said request for transmission towards said network node;
in response to receiving a response, said response comprising a timing advance indicator, said timing advance indicator indicating a difference in time between receipt of said request at said network node and said predetermined time, determining whether said received response is a response to said request in dependence upon said timing advance indicator and said determined timing advance;
**characterised in that** the method further comprises:
providing a timing offset;
and wherein said step of outputting said request towards said network node comprises outputting said request with said selected timing offset; and
said step of determining whether said received response is a response to said request comprises determining in dependence upon said timing advance indication, said timing offset and said determine timing advance.

13. A computer program comprising computer readable instructions which when executed by a processor on a user equipment are operable to control said processor to perform a method according to claim 12.
